Europäisches Patentamt

European Patent Office

Office européen des brevets

(19)

(11) Publication number : **0 441 632 A2**

(12) **EUROPEAN PATENT APPLICATION**

(21) Application number : **91301010.4**

(22) Date of filing : **07.02.91**

(51) Int. Cl.⁵ : **G01M 3/28**

(30) Priority : **09.02.90 GB 9002915**

(43) Date of publication of application :
**14.08.91 Bulletin 91/33**

(84) Designated Contracting States :
**BE DE ES FR GB NL**

(71) Applicant : **LAMBRECHTS N.V.**
**Gansbroekstraat 25**
**B-2658 Ruisbroek-Puurs (BE)**

(72) Inventor : **Beyens, Jozef Hubert Marie**
**Edegemsestraat 27**
**B-2540 Hove, Antwerp (BE)**

(74) Representative : **Brown, David Alan et al**
**MATHYS & SQUIRE 10 Fleet Street**
**London EC4Y 1AY (GB)**

(54) **Apparatus for detecting micro-leakage of gas from pressurised containers.**

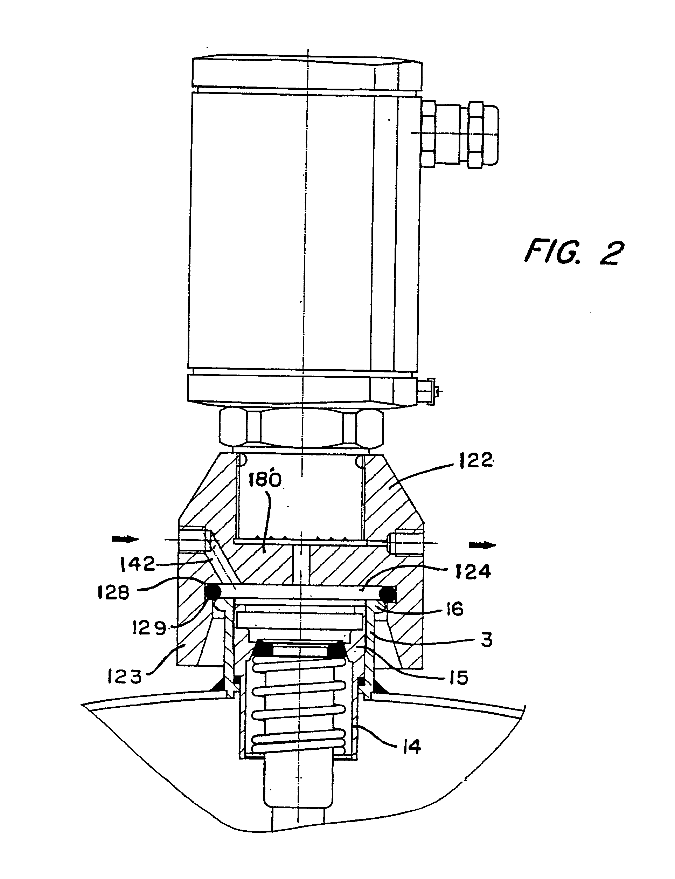

(57) Apparatus for detecting micro-leakages of gas from the neck of a pressurised container such as a beer keg. A head (20) has a skirt (23) which fits around the neck (3) and seals against the wall (2) of the keg around the neck (3) to define a cavity (24). The cavity (24) can be filled with water though a valve (52) and inlet (44,42), whilst air in the cavity (24) is expelled through an outlet (46,48) and valve (56). When the valves (52,56) are closed, any leakage of gas into the cavity (24) increases the pressure in the cavity (24). The increase in pressure is sensed by a pressure sensor (36) including a diaphragm (38) one side of which is open to fluid in the cavity (24). In another embodiment (Figure 2), the head (20) has a skirt (123) which engages the rim (16) of the neck (3) of the keg through a sealing ring (129) to define the cavity (124).

EP 0 441 632 A2

FIG.1

# APPARATUS FOR DETECTING MICRO-LEAKAGE OF GAS FROM PRESSURISED CONTAINERS

This invention relates to apparatus for detecting micro-leakage of gas from pressurised containers.

The invention relates in particular, but not exclusively, to apparatus for detecting micro-leakages of gas from kegs used for beer and similar beverages. Such kegs have a neck to which, in use, a beverage line and a gas line can be connected through a coupler arranged to engage the neck, so that carbon dioxide under pressure can be supplied through the gas line to force liquid out of the keg through the beverage line. The neck of the keg is usually fitted with a spear valve which is normally closed, to seal the keg, until the spear valve is opened by connection of the coupler. After a keg has been filled with beer or other beverage the contents of the keg are under pressure, and any leakage of gas from the keg through the neck can allow ingress of air which can cause deterioration of the beverage. It would therefore be desirable to be able to detect micro-leakages of gas from kegs after they have been filled and before they are dispatched to the customer.

It has been proposed to detect micro-leakages from kegs by connecting to the neck a head defining a cavity surrounding the neck, and detecting leakage of gas into the cavity by detecting the build-up of pressure in the cavity. A disadvantage of this method is the relatively long time taken for micro-leakage of gas into the cavity to increase pressure in the cavity by a detectable amount. Such a method is not therefore suitable for routinely checking for micro-leakages in kegs, for example in a brewery where the rate of throughput of kegs can be very high. A further disadvantage is the difficulty of forming a stable cavity of closed volume surrounding the neck. This is particularly difficult with kegs having spear valves of the "flat top" type, in which a flange at the top of the spear projects outwards over the rim of the neck.

This invention consists in apparatus for detecting micro-leakage of gas from the neck of a container comprising a head adapted to fit around or against the neck of the container and to sealingly engage the neck or the container so as to define a cavity enclosing the opening in the neck, means for filling the cavity with an incompressible fluid, and means for detecting an increase in pressure in the cavity.

The means for filling the cavity may comprise an inlet opening into the cavity through which fluid, such as water, can be supplied through a valve, and an outlet from the cavity to allow air to escape from the cavity, through a valve, as the cavity is being filled.

Preferably, the means for detecting an increase in pressure in the cavity comprises a flexible diaphragm open at one side to fluid in the cavity and connected to a device for detecting displacement of the diaphragm.

Preferably, the head has a recess which can receive the neck of the container and which is defined by a skirt arranged to fit over the neck and to sealingly engage the wall of the container surrounding the neck.

In an alternative embodiment, for use with kegs having spear valves of the kind in which the valve is contained wholly within the neck of the keg, the head is arranged to make sealing contact with the rim of the neck.

In use of the apparatus of the invention, the cavity is filled with incompressible fluid, such as water. This means that the effective volume into which gas can leak from the keg is reduced to zero, so that even a minute leakage of gas will cause a detectable increase in pressure in the cavity. Micro-leakage of gas can therefore be detected rapidly, for example by sensing whether the pressure in the cavity increases above a predetermined threshold value in a preset time period.

The invention will now be described, by way of example, with reference to the accompanying drawings, in which :

Figure 1 shows, partly in cross-section, an apparatus in accordance with the invention in position on a keg having a spear valve of the type with a flange extending over the neck,

Figure 2 shows, partly in cross-section, another form of apparatus in accordance with the invention, on a keg having a spear valve of the kind in which the valve is contained within the neck of the keg.

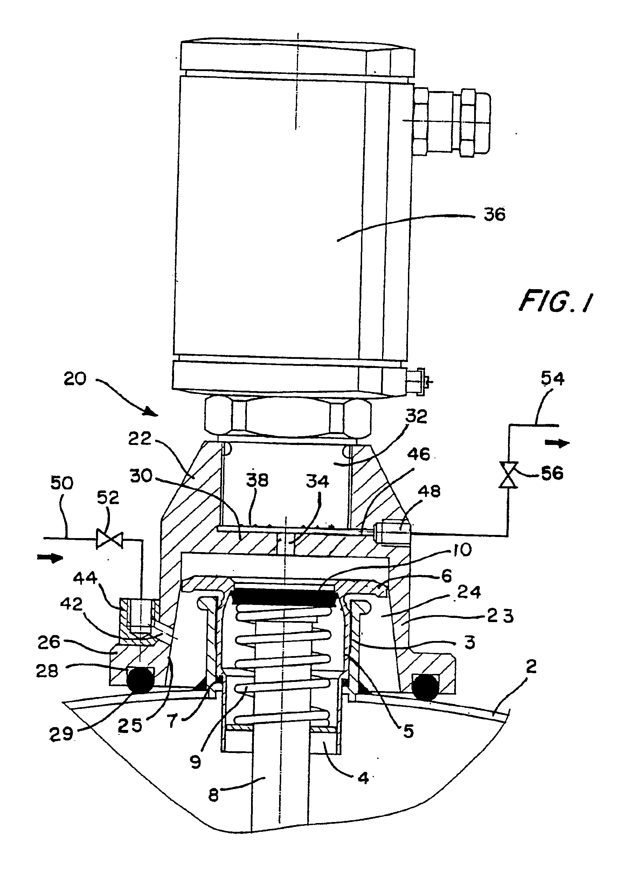

Referring to the drawings, Figure 1 shows the upper wall 2 and neck 3 of a keg. The keg has a spear valve 4 of the kind having a body 5 which fits inside the neck 3 and a flange 6 which projects over the rim of the neck. An O-ring 7 is positioned between the body 5 and the inner face of the neck 3, to prevent leakage of gas between the body 5 and the neck. The spear 8 of the valve 4 is normally biased by a spring 9 to a closed position in which a sealing member 10 at the top of the spear engages a seat formed in the valve body 5.

A leakage detection device 20 in accordance with the invention comprises a head 22 having a skirt 23 which defines a recess 24, so that the head can fit over the neck 3 of the keg with the skirt 23 surrounding the neck. The skirt has a lower rim portion 26 which engages the upper wall 2 of the keg. An O-ring 29 held in a groove 28 in the rim portion 26 provides a seal between the head 20 and the keg wall 2.

The top of recess 24 is bounded by a wall 30, above which is a second recess 32 which is threaded to receive a pressure sensing device 36. A passage 34 through wall 30 provides communication between the recess 24 and the recess 32. The pressure sensing device 36, which may be of conventional construction, is of the kind having a sensor in the form of a flexible diaphragm 38. Change in pressure on its outer face cause deflection of the diaphragm 38 which is converted by components in the body of the sensing device into an electrical output signal. The sensing device 36 is connected to the head 20 so that the diaphragm 38 is spaced slightly above the upper face of wall 30, so that pressure in the recess 24 is transmitted to the diaphragm 38 through the passage 34.

An inlet into the recess 24 is provided through a bore 42 in the skirt 23 and a socket 44 to which a water inlet line 50 can be connected. An outlet from the recess 24 is provided by a bore 46 extending from the space below diaphragm 38 to a socket 48 in the head 20, to which an outlet line 54 can be connected. Valves 52 and 56 in the inlet line 50 and outlet line 54 are provided to control the flow of water into the recess 24.

In use, the head 22 is lowered onto the keg to the position shown in Figure 1, with sufficient downward force to ensure a seal between the rim 26 and the upper wall 2 of the keg. Valves 52 and 56 are opened to allow water to flow into the recess 24 in the head 22. When water is flowing from the outlet 48, indicating that the recess is full, valves 52 and 56 are closed. The head 22 is held in place for a predetermined period, during which the output of the pressure sensing device 50 is monitored. Any leakage of gas into the recess 24 during this period will cause the pressure in the recess to increase. The increase in pressure is detected by the sensing device 36. Control equipment receiving the output signal from the sensing device 36 is arranged to detect if the increase in pressure exceeds a preset threshold value. After the predetermined period, the head 22 is raised from the keg. The small amount of water in the cavity may be allowed to escape to the top of the keg. A cap is then fitted to the neck of the keg in the usual way.

Since the recess 24 is filled with water during the predetermined sensing period, it takes only a very small leakage of gas into the recess 24 to increase the pressure in the recess by a detectable amount. The predetermined sensing period can therefore be made relatively short, typically 5 seconds, so that the apparatus can be used, for example, to check every keg on an output line in a brewery. The apparatus will detect leakage of gas whether through the spear valve 4 or between the body 5 of the spear valve and the neck 3 of the keg.

Since the head 22 makes sealing contact with the wall 2 of the keg (which, unlike the neck and rim of the keg is unlikely to have suffered damage or distortion during handling), the cavity defined when the head is engaged with the keg is stable and of well-defined volume. The head can be brought into sealing engagement with the keg by a simple downwards movement. The lower part of the skirt 23 may have a tapered inner face 25, to assist in locating the head over the flange 6 of the spear valve as the head is lowered onto the keg. Operation of the apparatus can easily be automated. A number of the devices could be arranged, for example, on a carousel, so that kegs can be checked without interrupting their travel along the output line. The output signal from the pressure detector 36 can be used to cause kegs where leakages have been detected to be diverted from the output line. A sterilising agent may be included in the water supplied to the cavity 24, so that the neck 3 and spear valve 4 are sterilised before the keg is capped.

Figure 2 shows an alternative embodiment of the invention, for use with kegs of the kind in which the body 15 of the spear valve 14 is contained within the neck 3 of the keg. The body 122 of the apparatus has a skirt 123 which is shorter than the skirt of the Figure 1 embodiment, so that it does not engage the upper wall 2 of the keg. The recess 124 in the head is shaped to fit closely around the neck 3, with an O-ring 129 held in a groove 128 in the inner face of the recess sealingly engaging the rim of the neck 3. The water inlet passage 142 leads into the recess 124 through the upper wall 130 of the recess.

Operation of the embodiment of Figure 2 is similar to that of the embodiment of Figure 1.

The embodiment of Figure 2 has the advantage that the cavity to be filled with water is smaller than that in the embodiment of Figure 1, so that the sensing period can be further reduced, but has the disadvantage that forming an effective seal against the neck of the keg may be more difficult than forming a seal against the upper wall of the keg.

It will be appreciated that other modifications could be made in the described embodiments. For example, other forms of pressure detector could be used to detect pressure in the cavity defined by the head. Other incompressible fluids could be used in place of water to fill the cavity. The apparatus of this invention could be adapted for detecting micro-leakage in other pressurised containers, such as gas cylinders.

## Claims

1.  Apparatus for detecting micro-leakage of gas from the neck (3) of a container, the apparatus comprising a head (20) adapted to fit around or against the neck (3) of the container and to sealingly engage the neck (3) or the container so as to define a cavity (24,124) enclosing the opening in the neck (3), means (50,44,42) for filling the cavity (24,124) with an incompressible fluid, and means (36,38) for detecting an increase in pressure in the cavity (24,124)

2.  Apparatus as claimed in Claim 1, in which the means for filling the cavity comprises an inlet (44,42) opening into the cavity (24,124) through which fluid can flow to the cavity (24,124), and an outlet (46,48) from the cavity (24,124) to allow air to escape from the cavity as fluid flows into the cavity.

3. Apparatus as claimed in Claim 2, in which inlet and outlet valves (52,56) are connected to the inlet (44,24) and outlet (46,48) respectively, to enable the cavity (44,24) to be closed after it has been filled with fluid.

4. Apparatus as claimed in any preceding claim, in which the means for detecting an increase in pressure in the cavity (24,124) comprises a flexible diaphragm (38) open at one side to fluid in the cavity and connected to a device (36) for detecting displacement of the diaphragm (38).

5. Apparatus as claimed in Claim 4, in which the diaphragm (38) is positioned in a recess (32) in the head (20), spaced from a wall (30) of the recess, and a passage (34) through the wall allows communication between the recess (32) and the cavity (24,124).

6. Apparatus as claimed in any preceding claim, in which the head has a downwardly extending skirt (23) arranged to fit over the neck (3) of the container and to sealingly engage the wall (2) of the container surrounding the neck (3) so as to define the cavity (24).

7. Apparatus as claimed in Claim 6, in which the lower edge of the skirt (23) is formed with a flange (26), and a sealing ring (29) is mounted on the flange (26) to sealingly engage the wall (2) of the container around the neck (3).

8. Apparatus as claimed in any one of Claims 1 to 5, in which the head (20) has a skirt (123) arranged to fit over the neck (3) of the container and to sealingly engage the rim (16) of the neck (3) so as to define the cavity (124).

9. Apparatus as claimed in Claim 8, in which the skirt (123) is formed on its internal face with an annular recess (128) in which is mounted a sealing ring (129) arranged to engage the rim (16) of the neck (3) of the container.

10. Apparatus as claimed in any preceding claim, in which the incompressible fluid is water.

FIG.1

FIG. 2